# FASCICULE DE BREVET EUROPEEN

(11) **EP 1 638 792 B1**
(45) Date de publication et mention de la délivrance du brevet: **22.12.2010**
(21) Numéro de dépôt: 04767379.3
(22) Date de dépôt: 17.06.2004
(51) Int. Cl.: B60D 1/24

(54) **ENSEMBLE D'ARTICULATION D'ATTELAGE A AMORTISSEMENT DES MOUVEMENTS DE LACET D'UNE REMORQUE**
VERBESSERTE ANHÄNGERKUPPLUNGSANORDNUNG, DIE DIE SCHLINGERBEWEGUNGEN EINES VON EINEM KRAFTFAHRZEUG GEZOGENEN STRASSENANHÄNGERS DÄMPFT
IMPROVED HITCH COUPLING ASSEMBLY WHICH DAMPENS THE HUNTING MOVEMENTS OF A ROAD TRAILER BEING TOWED BY A MOTOR VEHICLE

(30) Priorité: 27.06.2003 FR 0307783
(43) Date de publication de la demande: 29.03.2006
(73) Titulaire: LOHR INDUSTRIE S.A., F-67980 Hangenbieten (FR)
(72) Inventeur: DONNARD, René, F-67310 Westhoffen (FR)
(74) Mandataire: Metz, Paul
(86) Numéro de dépôt international: PCT/FR2004/001518
(87) Numéro de publication internationale: WO 2005/002889

(56) Documents cités:
- FR-A- 1 074 895
- US-A- 2 871 030
- US-A- 3 519 287

## Description

L'invention se rapporte de façon générale à un attelage d'un ensemble routier composé d'un véhicule à moteur et d'une remorque, comprenant un dispositif d'amortissement des mouvements de lacet de la remorque. Elle concerne plus particulièrement un ensemble d'articulation d'attelage renfermant un dispositif d'amortissement amélioré des mouvements de lacet à frein formé par exemple, d'au moins un disque de friction ou d'une pluralité de disques de friction.

Cet ensemble d'articulation d'attelage est plus particulièrement destiné à améliorer la tenue de route d'un ensemble routier formé d'un véhicule à moteur et d'une remorque à essieux centraux appelée également remorque équilibrée et l'entretien de l'amortisseur de mouvements de lacet.

On connaît les risques et les dangers liés aux mouvements de lacet des remorques routières notamment dans des configurations de descente à partir de certaines vitesses, à l'occasion de manoeuvres brutales de déviation de cap, en particulier lors d'un évitement ou en cas de mauvaise répartition des charges.

Ces risques peuvent aller jusqu'à provoquer le renversement de la remorque ou sa mise dans une position de biais dite en portefeuille.

Pour limiter l'amplitude des mouvements de lacet, de nombreux dispositifs existent déjà.

Il s'agit notamment de bras latéraux télescopiques avec effet d'amortissement. Ces bras sont montés de part et d'autre le long de l'attelage rotulés par une de leurs extrémités sur l'arrière du véhicule à moteur et rotulés par leur autre extrémité sur l'attelage ou sur la remorque.

Malheureusement, ces bras limitent les angles de braquage et modifient la cinématique. En outre, ils sont particulièrement encombrants.

On connaît également des dispositifs d'amortissement des mouvements de lacet, tels que ceux décrits dans les demandes FR 2.796.887, FR 2.044.031, DE 25 27 673 A, DE 77 18 934U et CH 675 858 A, constitués d'une piste en arc de cercle ou d'un secteur de disque métallique et d'un étrier fixé sur le timon de la remorque et muni de deux patins de friction. Ces patins sont pressés fortement de part et d'autre de la piste curviligne ou du secteur de disque à l'aide d'un dispositif pneumatique ou à force élastique engendrant ainsi un freinage par friction des mouvements de pivotement du timon par rapport au véhicule tracteur et amortissant les mouvements de lacet de la remorque.

Ces systèmes connus d'amortissement, s'ils sont satisfaisants du point de vue du fonctionnement, sont encombrants et contraignants pour l'utilisateur car ils requièrent un niveau d'entretien assez important de la part de l'utilisateur.

En effet, la surface de friction étant limitée, les patins de friction ont tendance à s'user rapidement lors du fonctionnement et ils doivent être remplacés régulièrement pour que le dispositif continue à être efficace.

De plus, il est difficile pour le chauffeur d'avoir à se rappeler de vérifier l'usure des patins.

En outre, les dispositifs d'amortissement de ce type sont situés à l'extérieur et ne comportent aucune protection physique. Ils sont soumis aux conditions climatiques, à l'entrée de saletés, à des projections de matières abrasives telles que du sable, des gravillons ou de liquides ou de corps gras ou autres venant se déposer sur les surfaces de friction. Tout ceci augmente considérablement l'usure des patins de friction car une usure irrégulière se traduit rapidement par une usure uniforme.

Par ailleurs, dans les systèmes pneumatiques ou hydrauliques, l'utilisateur doit également surveiller la pression hydraulique ou pneumatique pour s'assurer de la fiabilité du dispositif.

Du fait de ces contrôles et de cet entretien à réaliser, un tel dispositif est donc particulièrement contraignant pour les utilisateurs.

Ces systèmes antérieurs posent également un problème d'encombrement au voisinage de l'attelage entre le véhicule à moteur et sa remorque. En effet, ils sont relativement encombrants et doivent être montés dans une zone où passent de nombreux flexibles et autres éléments structurels et de liaison.

On connaît également un autre dispositif d'attelage décrit dans le brevet US 3.801.133. Il comporte une articulation à boule et deux barres jumelées à la barre de traction et solidarisées au timon de la remorque. Au cours des mouvements de lacet, ces barres jumelées pivotent autour d'un axe coïncidant avec celui de l'articulation à boule. Les deux barres sont réunies transversalement par une tige de liaison qui porte en partie supérieure une plaque de friction venant frotter contre une garniture de friction habillant une extension semi-circulaire du corps principal du dispositif d'attelage lié au véhicule tracteur.

En cas de pivotement des barres, un dispositif à cames provoque l'application d'une force différente sur chacune de ces barres et ainsi une modification de la répartition de la force de compression entre les surfaces de friction, celle-ci n'étant plus uniforme mais plus importante au niveau de l'une des barres.

Ce dispositif antérieur présente des inconvénients similaires à ceux précédemment décrits.

Comme les autres systèmes, ce dispositif d'amortissement est situé à l'extérieur, dans une zone déjà très encombrée et ne comporte aucune protection physique, augmentant ainsi l'usure des surfaces de friction. De plus, le basculement relatif des barres lors des mouvements de lacet, provoque un frottement qui n'est ni plan, ni uniforme, ce qui accroît considérablement la vitesse d'usure des surfaces de friction et diminue l'efficacité de l'amortissement.

On connaît enfin le brevet US-3 519 287, qui décrit un attelage de liaison entre un véhicule tracteur et une remorque, qui réalise un amortissement des mouvements de lacet dans les courbes du trajet.

Cet attelage comprend une plaque de connexion fixée à la remorque, deux plaques de friction qui pivotent ensemble par rapport à la plaque de connexion et qui se trouvent en appui élastique contre la plaque de connexion sous l'effet de deux plaques extérieures de pression. Une tige de couplage traverse les différentes plaques et sert d'axe de pivotement pour les plaques de friction lors des mouvements de lacet.

Les plaques de pression sont raccordés au véhicule tracteur par l'intermédiaire d'une charnière permettant les mouvements de roulis et de tangage, qui est formée d'un axe transversal aux véhicules sur lequel est enfilée une succession d'anneaux oblongs solidarisés alternativement au véhicule tracteur et à la plaque de pression inférieure.

Là encore, le dispositif d'amortissement des mouvements de lacet est placé à l'extérieur, sans protection par rapport à l'environnement extérieur, aux conditions climatiques et à l'entrée de matières abrasives susceptibles de dégrader les surfaces de friction et la performance de l'amortissement.

En outre, un jeu de fonctionnement suffisant doit obligatoirement exister entre la tige et les anneaux de la charnière pour permettre les mouvements de roulis et de tangage, ce qui provoque inévitablement l'apparition à ce niveau d'un certain jeu en lacet. Les mouvements de lacet ne sont donc pas transmis sans jeu à l'articulation de lacet, ce qui entraîne une usure plus rapide et inégale des surfaces de friction.

Le but de l'invention est de fournir un système permettant d'amortir et donc de limiter l'amplitude des mouvements de lacet de la remorque dans un ensemble routier formé d'un véhicule à moteur tractant une remorque, qui ne présente pas les inconvénients énoncés ci-dessus.

Pour atteindre ce but, le dispositif d'amortissement a été intégré à l'intérieur de l'ensemble d'articulation d'attelage, qui conserve cependant un volume sensiblement équivalent. Tout problème d'encombrement lié à la présence d'un dispositif annexe est ainsi supprimé. En outre, le dispositif d'amortissement, se trouve à l'abri à l'intérieur du crochet d'attelage et ainsi protégé des agressions extérieures telles que les projections de matières abrasives ou grasses. Son usure se réduit ainsi considérablement, permettant de garantir à l'utilisateur une longue durée d'utilisation avant le remplacement des surfaces de friction.

Selon la réglementation actuelle, les ensembles d'articulation ou crochets d'attelage de ce type doivent pouvoir transmettre un mouvement de lacet de ± 90°, un mouvement de tangage de ± 8° et un mouvement de roulis de ± 3°, ainsi que la combinaison de ces trois mouvements caractéristiques élémentaires.

Selon une caractéristique essentielle revendiquée, l'axe des mouvements de lacet a été découplé des axes des mouvements de roulis et de tangage dans l'ensemble d'articulation d'attelage selon l'invention.

L'ensemble d'articulation d'attelage selon l'invention se caractérise par une première articulation de pivotement permettant les mouvements de lacet et comprenant un dispositif pivotant d'amortissement des mouvements de lacet de la remorque, et une deuxième articulation pour les mouvements de roulis et de tangage, l'axe des mouvements de lacet étant découplé des axes des mouvements de roulis et de tangage.

Le dispositif d'amortissement des mouvements de lacet comporte préférentiellement au moins un disque coopérant avec au moins une surface en regard appliquée sur le disque par un système de compression exerçant sur ceux-ci une force axiale de compression, l'une au moins des surfaces en regard étant une surface de friction.

De manière préférentielle, l'amortissement des mouvements de lacet est obtenu par un frottement sec sur un empilement de disques de friction alternativement solidaires du véhicule à moteur ou de la remorque, pivotant les uns par rapport aux autres sous l'effet des mouvements de lacet.

Grâce à cet empilement, on multiplie les surfaces de friction, ce qui diminue sensiblement l'usure de celles-ci et augmente la durée de vie du système.

Avantageusement, le découplage de l'axe de lacet d'une part et des axes de roulis et de tangage d'autre part permet d'obtenir un frottement restant constamment plan, c'est-à-dire dans de bonnes conditions, à savoir sans efforts parasites sur les disques de friction. L'usure en est d'autant plus réduite, d'autant plus que les vitesses angulaires sont faibles et le rayon des disques est grand.

L'invention permet ainsi de réaliser un ensemble d'articulation d'attelage à amortissement des mouvements de lacet qui ne demande qu'un entretien extrêmement limité de la part de l'utilisateur et offre une longue période d'utilisation avec les composants d'origine. En effet, le but visé consiste à ce que l'utilisateur ne soit obligé de remplacer les disques de friction qu'au maximum une fois dans la durée de vie de la remorque, l'idéal étant un dispositif d'amortissement ne nécessitant aucune maintenance, c'est-à-dire un dispositif dont la durée de vie est comparable ou supérieure à celle de la remorque, soit environ un million de kilomètres.

D'autres caractéristiques et avantages de l'invention apparaîtront dans la description qui suit, donnée à titre d'exemple non limitatif en référence au dessin dans lequel :
- la figure 1 est une vue générale en perspective de dessus et en oblique de l'arrière du véhicule à moteur et d'une première variante de l'ensemble d'articulation d'attelage à la remorque selon l'invention ;
- la figure 2 est une vue en perspective pour cette première variante de l'ensemble d'articulation d'attelage à amortissement des mouvements de lacet selon l'invention ;
- la figure 3 est une vue en plan de la première variante de l'ensemble d'articulation d'attelage selon l'invention ;
- la figure 4 est une vue en coupe longitudinale, suivant la ligne de coupe IV-IV de la figure 3, de la première variante de l'ensemble d'articulation d'attelage selon l'invention ;
- la figure 5 est une vue en coupe transversale, suivant la ligne de coupe V-V de la figure 3, de la première variante de l'ensemble d'articulation d'attelage selon l'invention ;
- la figure 6 est une vue en perspective partiellement en coupe d'une deuxième variante de l'ensemble d'articulation d'attelage selon l'invention, le quart arrière en premier plan étant tronqué ;
- la figure 7 est une vue en perspective éclatée des principaux éléments constitutifs de l'articulation de tangage et de roulis de l'ensemble d'articulation d'attelage selon la deuxième variante de l'invention ;
- la figure 8 est une vue en perspective partiellement en coupe d'une troisième variante de l'ensemble d'articulation d'attelage selon l'invention, le quart avant en premier plan étant tronqué ;
- la figure 9 est une vue en perspective éclatée des principaux éléments constitutifs de l'articulation de tangage et de roulis de l'ensemble d'articulation d'attelage selon la troisième variante de l'invention ;
- la figure 10 est une vue en perspective éclatée des principaux éléments constitutifs de l'articulation de lacet de l'ensemble d'articulation d'attelage selon la première, la deuxième ou la troisième variante de l'invention.

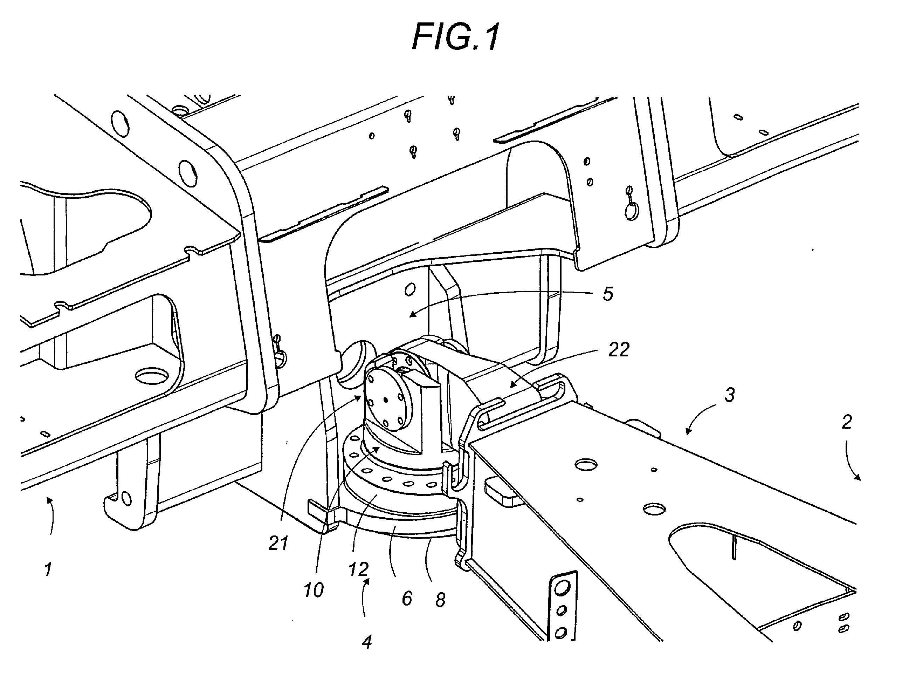

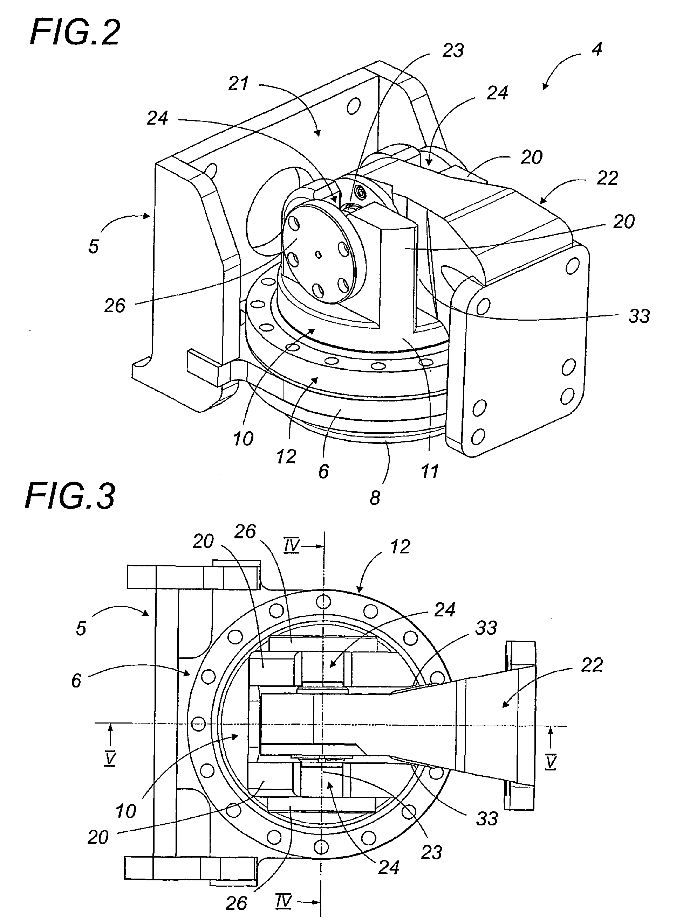

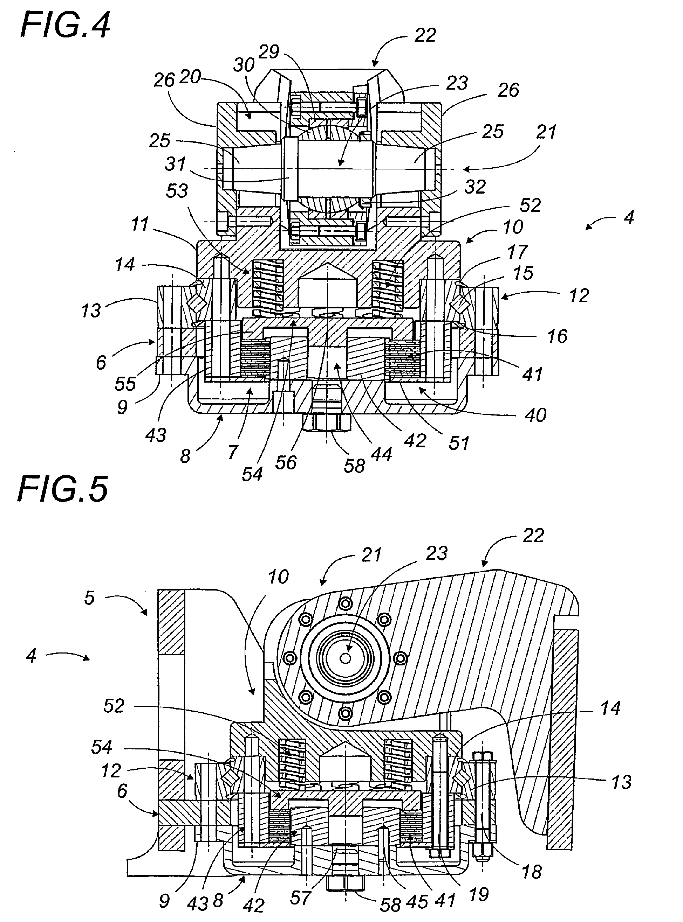

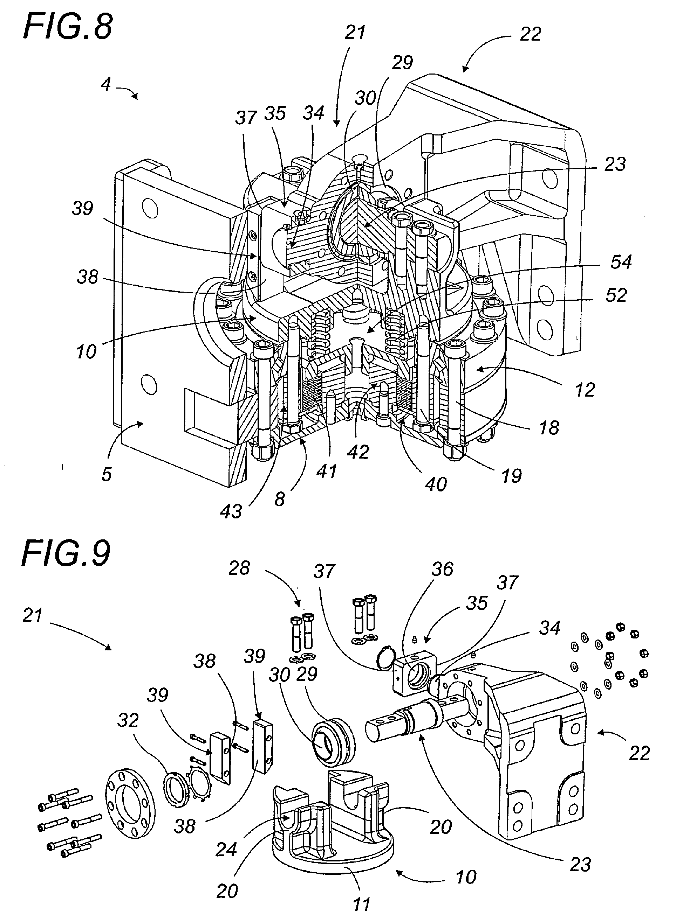

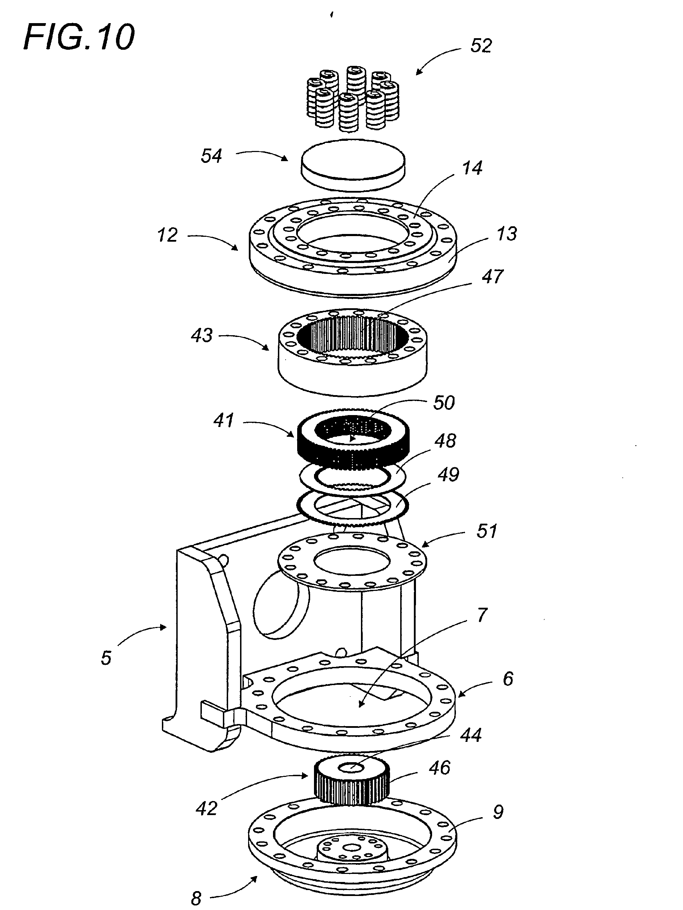

L'ensemble d'articulation d'attelage à amortissement des mouvements de lacet selon la présente invention va maintenant être décrit de façon détaillée en référence aux figures 1 à 10 qui représentent trois modes de réalisation préférentiels de l'invention. Il doit cependant être bien compris qu'il ne s'agit que d'exemples de réalisation de l'invention, décrits et représentés dans un but illustratif pour améliorer la compréhension de celle-ci, mais qui ne sont en rien limitatifs de sa portée.

Les éléments équivalents représentés sur les différentes figures porteront les mêmes références numériques.

L'attelage comprenant l'ensemble d'articulation selon l'invention se monte à l'arrière d'un véhicule à moteur 1 et permet de lui accoupler une remorque 2 par l'intermédiaire d'un timon 3. Il comporte une série de pièces fixes par rapport au camion, articulées sur une série de pièces fixes par rapport à la remorque et permet ainsi de transmettre les trois mouvements élémentaires de lacet, de tangage et de roulis, liés au roulage.

L'attelage comprend un ensemble d'articulation d'attelage 4, fixé à l'arrière du véhicule au moyen d'une plaque support 5. Cette plaque support 5 peut être directement montée sur le châssis du véhicule à moteur 1 ou peut faire partie d'un bloc constructif fixe par rapport au véhicule.

La plaque support 5 se poursuit par une embase 6, de préférence sensiblement perpendiculaire à la plaque de support 5 et par exemple en forme générale d'anneau. La partie intérieure de l'embase 6 délimite ainsi un espace intérieur 7 destiné à recevoir les différents éléments constitutifs de l'ensemble d'articulation d'attelage selon l'invention.

L'espace intérieur 7 de cet ensemble d'articulation est fermé en partie inférieure par un support inférieur ou carter 8 de forme par exemple circulaire, comportant un rebord périphérique 9 en appui contre la partie pleine de l'embase annulaire 6.

En partie supérieure, il est fermé par une chape 10 dont la base 11 est également de préférence circulaire.

Entre l'embase annulaire 6 et la base 11 de la chape 10, s'intercale un organe de palier formé par exemple d'une couronne à galets 12 qui porte à pivotement une articulation supérieure et ainsi autorise les mouvements de lacet. Il s'agit d'un organe à fonction générale de palier recevant à pivotement l'articulation supérieure. De manière classique, la couronne à galets 12 se compose d'une couronne extérieure 13 qui repose sur la partie annulaire pleine de l'embase 6 et d'une couronne intérieure 14 solidarisée à la base 11 de la chape 10. Ces deux couronnes concentriques 13 et 14 sont montées à pivotement l'une par rapport à l'autre formant une liaison palière de pivotement par une série de galets cylindriques 15 intercalés entre les deux couronnes.

Pour des raisons d'étanchéité, la couronne à galets 12 est de préférence équipée de deux joints annulaires à lèvre 16 et 17 logés chacun dans une rainure respectivement de la couronne extérieure 13 et intérieure 14 et dont la lèvre repose sur la couronne adjacente.

La plaque support 5, l'embase annulaire 6, le carter 8 et la couronne extérieure 13 sont assemblés mécaniquement par exemple au moyen de boulons 18, de manière à constituer un ensemble fonctionnel fixe par rapport au véhicule à moteur 1 car solidaire de la partie arrière de son châssis.

De même, la couronne intérieure 14 et la chape 10 sont assemblées par exemple au moyen de boulons 19 et forment un ensemble pivotant autour d'un axe perpendiculaire au plan du châssis, autorisant ainsi les mouvements de lacet et constituant une première articulation.

La chape 10 comporte également deux étriers latéraux 20 s'élevant à partir de la base 11. Ces étriers 20 portent une articulation supérieure 21 à deux degrés de liberté autour des deux autres axes du trièdre de référence pour les mouvements de roulis et de tangage liés au roulage. Cette articulation supérieure peut comporter une rotule. Elle réalise la liaison mécanique avec la remorque 3 par l'intermédiaire d'un tenon 22.

Le tenon 22 est solidarisé par tout moyen approprié au timon 3 de la remorque 2. On peut également envisager que l'extrémité avant du timon 3 remplace le tenon 22 et soit directement reliée à l'articulation supérieure 21 pour se dispenser d'un assemblage supplémentaire, mais en perdant les avantages de la modularité.

Plus précisément, l'articulation supérieure 21 peut être réalisée au moyen d'un axe transversal 23 qui repose dans des logements 24 des étriers latéraux 20.

Dans le premier mode de réalisation représenté sur les figures 1 à 5, cet axe 23 se termine par deux extrémités coniques 25. Il est immobilisé latéralement au moyen de deux flasques d'extrémité 26 fixés à la chape 10, recevant chacun l'une des extrémités coniques 25 de l'axe dans un logement conique complémentaire.

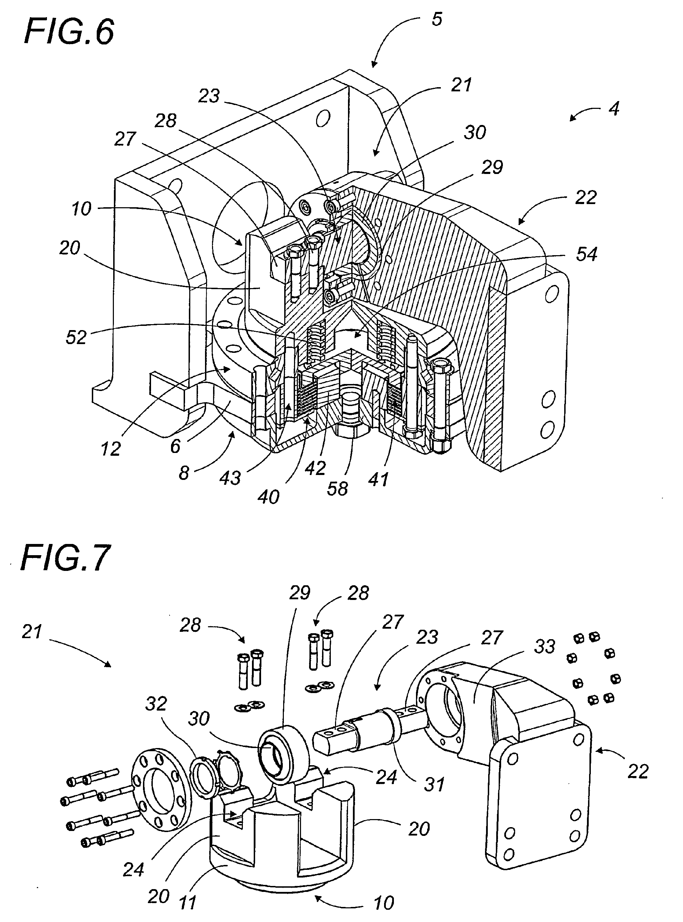

Dans les deuxième et troisième modes de réalisation représentés sur les figures 6 à 9, l'axe 23 se termine par deux extrémités aplaties 27, qui sont directement fixées sur les étriers latéraux 20 de la chape 10, par exemple par vissage au moyen de vis 28. Les flasques d'extrémité ne sont alors plus nécessaires.

D'autres variantes non représentées peuvent évidemment être imaginées par l'homme du métier.

Deux bagues 29 et 30 à portée sphérique complémentaire sont enfilées sur la partie centrale de l'arbre transversal 23, de manière à constituer un ensemble à effet de rotule autorisant les mouvements de tangage et de roulis.

Une bague intérieure 30 est immobilisée latéralement, d'un côté par un épaulement 31 conformé dans la masse de l'axe 23 et de l'autre par un écrou 32. Tout mouvement latéral au niveau de la rotule, s'assimilant à un jeu en lacet est ainsi rendu impossible sans déformation.

De la même façon, la bague extérieure 29 est fixée au tenon 22 sans possibilité de jeu latéral.

Grâce à cette articulation supérieure 21, le tenon 22 peut basculer en mouvements de tangage et de roulis par rapport à l'axe 23 et à la chape 10 et ainsi par rapport au véhicule à moteur 1.

Cependant, au cours de ces mouvements, aucun mouvement de lacet ne peut se produire à ce niveau. Ils sont intégralement transmis à l'articulation inférieure par le tenon 22.

A cette fin dans les première et deuxième variantes représentées, les flancs latéraux 33 du tenon 22 sont bombés de manière à rester toujours en contact cylindrique avec la face intérieure des étriers latéraux 20 de la chape 10.

Cependant, pour des raisons d'usure ou de matage accidentel par exemple suite à un choc ou à d'autres causes, ces surfaces risquent de ne plus être géométriquement préservées et de permettre ainsi un léger jeu entre chape et tenon.

Or, il importe de maintenir une absence de jeu pour amortir les mouvements de lacet dès le départ, c'est-à-dire dès les petits angles, afin d'éviter l'amplification des oscillations.

Dans la troisième variante de l'ensemble d'articulation d'attelage selon l'invention, un moyen plus avantageux a été utilisé pour assurer une meilleure préservation de l'absence de jeu.

Dans cette variante, le tenon 22 se prolonge par un doigt 34 sensiblement cylindrique engagé à pivotement dans une bague 35. Cette bague 35 présente un alésage central 36 recevant le doigt 34 et deux faces latérales extérieures sensiblement planes 37. De manière préférentielle, cette bague 35 peut être de forme générale carrée.

Les faces latérales planes 37 de la bague 35 se trouvent en contact de butée contre les faces latérales en regard 38 sensiblement planes, de deux cales de butée 39 solidarisées à la chape 10 de part et d'autre de la bague 35.

Cet agencement permet au tenon 22 de réaliser librement les mouvements de tangage et de roulis, alors que tout mouvement de lacet est empêché au niveau de l'articulation supérieure 21 par un contact d'appui, face plane contre face plane, de la bague 35 contre les cales de butée 39 et est intégralement transmis à la couronne 12.

Cette variante assure une absence totale de jeu en lacet pendant toute la durée de vie de l'ensemble d'articulation d'attelage selon l'invention en raison du contact d'appui plan et permanent des surfaces planes en regard et du fait que ces surfaces sont protégées du milieu extérieur.

Grâce à ces différents moyens et à leur agencement, les mouvements de lacet d'une part, de tangage et de roulis d'autre part sont parfaitement découplés, la couronne à galets 12 reprenant les mouvements de lacet et l'articulation supérieure 21 permettant uniquement les mouvements de tangage et de roulis.

En plus des éléments fonctionnels déjà décrits, l'espace intérieur 7 de l'ensemble d'articulation d'attelage 4 selon l'invention renferme un dispositif d'amortissement des mouvements de lacet 40. Ce dernier est logé dans un espace fermé, à l'abri des agressions du milieu extérieur. Il est ainsi protégé des entrées de matières abrasives ou grasses, des mauvaises conditions climatiques, du vandalisme ou autre, ce qui prolonge sa durée de vie et améliore son efficacité.

Ce dispositif d'amortissement 40 est du type à friction, à frein magnétique par exemple à courant de Foucault, ou autre.

La variante décrite ci-dessous porte sur un dispositif d'amortissement du type à friction. Dans ce cas, il comporte au moins une surface de friction en forme de disque solidaire de la partie mobile et au moins une face de friction reliée de façon rigide à un support faisant partie du support arrière du camion ou inversement. Sur cette surface de friction vient s'appliquer avec une certaine force de pression au moins une autre surface de friction ou une surface plus ou moins lisse ou tout autre moyen solidaire du support opposé fixe ou pivotant de manière à former au moins un ensemble de dégradation de l'énergie par friction fonctionnant comme un frein pour amortir les mouvements de lacet.

L'efficacité et la longévité sont améliorées du fait que toute la surface de friction est préservée et pleinement active même en cas de tangage ou de roulis.

Selon une variante préférentielle cet ensemble de frein à surfaces de friction est réalisé sous la forme d'un empilement de disques de friction 41, alternativement liés à un moyeu central 42 fixe par rapport au véhicule à moteur 1 ou à un tambour périphérique 43 mobile par rapport au véhicule, ces surfaces étant appliquées l'une contre l'autre par un ensemble de compression.

Le moyeu central 42 est de préférence une pièce sensiblement cylindrique à alésage central 44. Il est assemblé mécaniquement au carter 8, par exemple au moyen de goujons 45, pour le rendre fixe par rapport au véhicule à moteur 1. Avantageusement, le moyeu 42 présente une paroi extérieure crantée 46 destinée à coopérer en vue de leur blocage avec la série de disques à immobiliser par rapport au châssis du véhicule à moteur.

Le tambour périphérique 43 se présente préférentiellement sous la forme d'une couronne cylindrique, concentrique au moyeu central 42 et de plus grand diamètre. Afin d'être mobile par rapport au véhicule, le tambour périphérique 43 est assemblé à la couronne intérieure 14 de la couronne à galets 12, et par là à la chape 10, de préférence au moyen des boulons 19. Avantageusement, le tambour périphérique 43 comporte également une paroi intérieure crantée 47 destinée à bloquer sur celui-ci les surfaces mobiles de friction.

L'empilement de disques de friction 41 s'intercale entre le moyeu central 42 et le tambour périphérique 43. Il comprend une série de disques fixes 48 et de disques mobiles 49 en superposition alternative les uns sur les autres. Ces disques présentent une découpe centrale 50.

Les disques fixes 48, sont crantés sur leur périphérie intérieure autour de la découpe 50, de façon complémentaire aux crans de la paroi extérieure 46 du moyeu 42. De cette façon, ils sont rendus fixes par rapport au moyeu central 42 et donc au châssis du véhicule à moteur.

De manière similaire, les disques mobiles 49 sont crantés sur leur bord périphérique extérieur, de façon complémentaire aux crans de la paroi intérieure 47 du tambour 43 et sont entraînés de cette façon en pivotement par le tambour 43, lui même entraîné en pivotement lors des mouvements de lacet par la chape à travers l'organe de palier.

De manière préférentielle, le moyeu central 42 porte un disque sur deux, entre lesquels s'intercale un disque mobile 49 lié au tambour périphérique 47.

L'empilement de disques 41 repose en partie inférieure sur un plateau circulaire 51, assemblé mécaniquement avec le tambour 43 par exemple également au moyen des boulons 19.

Pour assurer l'efficacité du dispositif d'amortissement, une force axiale de compression est appliquée sur l'empilement de disques 41 permettant d'amener en contact de pression le plus uniformément possible les surfaces de friction en regard et ainsi de les faire travailler. Il est à noter que le contact s'effectue par plaquage simultanément sur toutes les surfaces de friction. Ce contact plan améliore la qualité de l'amortissement et la longévité des pièces de friction.

Cette force axiale de compression est par exemple une force élastique exercée au moyen de ressorts 52, par exemple au nombre de huit dans la variante représentée, disposés de manière circulaire dans des logements 53 de la chape 10.

Ces ressorts 52 appuient sur une coupelle 54 sensiblement circulaire, qui présente un rebord périphérique 55 à sous face plane et un piétement central 56, tous deux dirigés vers le bas.

La coupelle 54 vient, par l'intermédiaire de son rebord périphérique 55, appuyer sur l'empilement de disques 41 et le plaquer contre le plateau 51, assurant ainsi un parfait contact des surfaces de friction.

Le piètement central 56 de la coupelle est sensiblement cylindrique et s'engage à coulissement dans l'alésage central 44 du moyeu 42. Il permet à la coupelle 54 de pivoter par rapport au moyeu 42 afin de s'adapter aux mouvements de lacet.

Avantageusement, lorsque la force axiale est engendrée par des ressorts 52 comme dans les modes de réalisation représentés, elle s'adapte ou se règle en fonction de l'usure du dispositif d'amortissement. En effet, lorsque les surfaces de friction s'usent, l'épaisseur totale de l'empilement de disques 41 diminue. Les ressorts 52 s'allongeant en conséquence compensent cette diminution liée à l'usure, en assurant dans tous les cas une compression des disques par la coupelle 54, ce qui se traduit par un contact sous pression parfait des surfaces de friction.

Avantageusement, le carter 8 peut présenter une ouverture traversante 57, de préférence taraudée, située en regard de l'alésage central 44 du moyeu 42. En fonctionnement, cette ouverture 57 est obturée par un bouchon 58. A l'arrêt, le bouchon 58 peut être enlevé pour insérer un pied de profondeur jusqu'à la coupelle 54 et ainsi mesurer l'usure des disques de friction 41.

Pour faciliter les manoeuvres par exemple d'attelage ou de dételage de la remorque, un axe fileté peut être inséré à travers l'ouverture taraudée 57, puis l'alésage 44, jusqu'au contact avec la coupelle 54. Cet axe permet d'exercer une pression ascendante sur la coupelle 54 afin de comprimer les ressorts 52, ce qui libère les disques de friction 41.

Le fonctionnement de l'ensemble d'articulation d'attelage découle de manière évidente de la description précédente. Lors du roulage, les mouvements de tangage et de roulis sont supportés par l'articulation à rotule 21 et les mouvements de lacet par la couronne à galets 12.

Au cours des mouvements de lacet, les deux couronnes 13 et 14 de la couronne à galets pivotent l'une par rapport à l'autre, et avec elles l'ensemble des éléments qui leur sont mécaniquement solidarisés et constituent deux groupes fonctionnels pivotant l'un par rapport à l'autre.

Le premier de ces groupes est fixe par rapport au véhicule 1 et comprend la plaque support 5, l'embase 6, le carter 8, la couronne extérieure 13 de la couronne à galet 12, le moyeu central 42 et l'ensemble des disques fixes 48.

Le deuxième groupe est mobile en pivotement par rapport au premier groupe et comprend la chape 10, le tenon 22, la couronne intérieure 14 de la couronne à galets 12, le tambour périphérique 43, le plateau circulaire 51 et l'ensemble des disques mobiles 49.

Lorsqu'un mouvement de lacet se produit, les disques mobiles 49 entraînés par le tambour périphérique 43 pivotent par rapport aux disques fixes 48 liés au moyeu 42 avec lesquels ils sont en contact étroit de friction, ce qui provoque un freinage par frottement du mouvement de pivotement et limite le mouvement de lacet qui se trouve ainsi amorti.

L'efficacité du freinage est garantie par la force axiale générée par les ressorts 52 qui compriment l'empilement de disques de friction 41 par l'intermédiaire de la coupelle 54 et forcent ainsi les surfaces de friction opposées les unes contre les autres. La multiplication des surfaces de friction assure une efficacité maximale du freinage et une usure réduite du dispositif.

Bien entendu, l'homme du métier peut imaginer de nombreuses variantes du dispositif précédemment décrit sans sortir du cadre de la présente invention.

Par exemple, sur les modes de réalisation représentés, l'articulation 12 assurant les mouvements de lacet est située en partie inférieure et l'articulation 21 permettant les mouvements de tangage et de roulis en partie supérieure de l'ensemble d'articulation d'attelage 4 selon l'invention. L'homme du métier pourra cependant imaginer sans difficulté une variante de ce dispositif selon laquelle ces deux articulations sont inversées, l'essentiel étant que l'axe de pivotement en lacet reste parfaitement découplé des deux autres correspondant au roulis et au tangage.

De même, l'articulation 21 permettant les mouvements de tangage et de roulis n'est pas forcément constituée d'un axe portant une rotule, mais peut par exemple être formée d'une boule équipée d'un système de blocage des mouvements de lacet ou constitué d'une boule, le tenon 22 immobilisant les mouvements de lacet à ce niveau.

Le dispositif d'amortissement à friction peut comprendre un nombre quelconque de disques, au minimum un nombre suffisant pour assurer une durée de vie conforme à la périodicité des grandes visites d'entretien. Une variante « mono-disque » est même envisageable.

Les surfaces de friction du dispositif d'amortissement sont maintenues en contact étroit les unes avec les autres par un système de compression de nature quelconque, pouvant être un système mécanique par exemple à base de ressorts comme sur les variantes précédemment décrites. Il peut s'agir également d'un système pneumatique, hydraulique, électrique ou autre susceptible d'exercer un effort axial de compression.

Lorsque cet effort est appliqué par un système hydraulique, pneumatique ou électrique, il peut avantageusement être réglable au moyen d'un circuit d'asservissement afin d'adapter l'intensité de l'amortissement des mouvements de lacet par exemple en fonction de la vitesse et/ou du poids transporté.

Néanmoins, un tel dispositif d'amortissement est moins fiable qu'un dispositif équipé d'un système mécanique de compression. En effet, en cas de défaillance du système hydraulique, pneumatique ou électrique de compression l'amortissement des mouvements de lacet n'est plus réalisé.

On peut également envisager d'associer au système mécanique de compression un dispositif de désactivation de l'amortissement. Ce dispositif pourrait réduire ou interrompre l'amortissement en dessous d'une certaine vitesse où il n'est plus nécessaire, par exemple 50 Km/h, afin de faciliter les manoeuvres et de limiter l'usure des surfaces de friction. Un tel dispositif, par exemple pneumatique, hydraulique ou électrique, pourrait aux moments appropriés exercer sur la coupelle 54 une force axiale de sens opposé à la force de compression exercée par les ressorts 52 et ainsi libérer les surfaces de friction.

Un tel système est cette fois parfaitement sécurisé, car en cas de défaillance du dispositif de désactivation pneumatique, hydraulique ou électrique, l'amortissement est réalisé dans tous les cas.

Par ailleurs, pour des raisons de facilité de construction, les deux groupes fonctionnels pivotant l'un par rapport à l'autre comportent de nombreuses pièces indépendantes, mécaniquement assemblées entre elles. On peut évidemment envisager de réduire leur nombre, en les réalisant d'une seule pièce. Ainsi par exemple, le moyeu central 42 peut être formé d'un seul tenant avec le carter 8.

On a cité une application préférentielle de l'ensemble d'articulation d'attelage selon l'invention pour un ensemble routier formé d'un véhicule à moteur et d'une remorque à essieux centraux. Néanmoins, de nombreuses autres applications peuvent être envisagées, pour d'autres types de remorques et par exemple dans le domaine des caravanes, des vans et autres remorques spéciales.

## Revendications

1. Ensemble d'articulation d'attelage (4) d'un ensemble routier formé d'un véhicule à moteur (1) et d'une remorque (2), ensemble d'articulation d'attelage (4) comprenant une première articulation de pivotement (12) pour les mouvements de lacet qui comporte des surfaces de friction pour amortir les mouvements de lacet, et une deuxième articulation (21) pour les mouvements de roulis et de tangage,
la première articulation de pivotement (12) autorisant uniquement les mouvements de lacet et non les mouvements de roulis et de tangage, et comprenant un dispositif pivotant d'amortissement des mouvements de lacet (40) à surfaces de friction; la deuxième articulation (21) autorisant iniquement les mouvements de roulis et de tangage et non les mouvements de lacet, et transmettant intégralement les mouvements de lacet à la première articulation, de manière à rendre les mouvements de lacet totalement indépendants des mouvements de roulis et de tangage.
**caractérisé en ce que** l'ensemble d'articulation d'attelage (4) comporte un ensemble de parois (6, 8, 10, 12) qui délimitent entre elles un espace intérieur (7) complètement fermé à l'abri de l'entrée de matières polluantes et dans lequel sont entièrement logées les surfaces de friction du dispositif pivotant d'amortissement des mouvements de lacet (40)

2. Ensemble d'articulation d'attelage d'un ensemble routier selon la revendication précédente **caractérisé en ce que** l'articulation de pivotement permettant les mouvements de lacet comprend une couronne à galets (12).

3. Ensemble d'articulation d'attelage d'un ensemble routier selon l'une quelconque des revendications précédentes **caractérisé en ce qu'**il comporte une articulation pour les mouvements de roulis et de tangage (21) au niveau de laquelle aucun jeu en lacet n'est possible.

4. Ensemble d'articulation d'attelage d'un ensemble routier selon la revendication précédente **caractérisé en ce que** l'absence de jeu en lacet est garantie par un contact plan d'appui de surfaces planes en regard (37, 38).

5. Ensemble d'articulation d'attelage d'un ensemble routier selon l'une quelconque des revendications précédentes **caractérisé en ce que** l'articulation pour les mouvements de roulis et de tangage est une articulation à portée sphérique (21).

6. Ensemble d'articulation d'attelage d'un ensemble routier selon la revendication précédente **caractérisé en ce que** l'articulation pour les mouvements de roulis et de tangage (21) comprend un axe transversal (23) sur lequel sont enfilées deux bagues (29, 30) à portée sphérique complémentaire.

7. Ensemble d'articulation d'attelage d'un ensemble routier selon la revendication précédente **caractérisé en ce que** les bagues (29, 30) sont fixées sans possibilité de jeu latéral assimilable à un mouvement de lacet.

8. Ensemble d'articulation d'attelage d'un ensemble routier selon l'une quelconque des revendications précédentes **caractérisé en ce que** le dispositif d'amortissement des mouvements de lacet (40) comporte au moins un disque (41) coopérant avec au moins une surface en regard appliquée sur le disque par un système de compression exerçant sur ceux-ci une force axiale de compression, l'une au moins des surfaces en regard étant une surface de friction.

9. Ensemble d'articulation d'attelage d'un ensemble routier selon la revendication précédente **caractérisé en ce que** le dispositif d'amortissement des mouvements de lacet (40) comporte un empilement de disques de friction (41) alternativement solidaires du véhicule à moteur (1) ou de la remorque (2), pivotant les uns par rapport aux autres sous l'effet des mouvements de lacet.

10. Ensemble d'articulation d'attelage d'un ensemble routier selon la revendication précédente **caractérisé en ce que** l'empilement de disques de friction (41) contient au moins un disque fixe (48) solidaire d'un moyeu central (42) fixe par rapport au véhicule à moteur (1) et au moins un disque mobile (49) solidaire d'un tambour périphérique (43) mobile par rapport au véhicule.

11. Ensemble d'articulation d'attelage d'un ensemble routier selon la revendication précédente **caractérisé en ce que** la paroi extérieure (46) du moyeu (42) est crantée et **en ce qu'**au moins un des disques fixes (48) est également cranté de façon complémentaire, sur sa périphérie intérieure autour d'une découpe (50), de manière à être rendu fixe en pivotement par rapport au moyeu central (42).

12. Ensemble d'articulation d'attelage d'un ensemble routier selon la revendication 10 ou 11 **caractérisé en ce que** la paroi intérieure (47) du tambour périphérique (43) est crantée et **en ce qu'**au moins un des disques mobiles (49) est également cranté de façon complémentaire sur sa périphérie extérieure, de manière à être entraîné en pivotement par le tambour périphérique (43).

13. Ensemble d'articulation d'attelage d'un ensemble routier selon l'une quelconque des revendications 9 à 12 **caractérisé en ce que** le système de compression comprend une coupelle (54) qui vient appuyer sur l'empilement de disques (41) assurant ainsi un parfait contact des surfaces de friction.

14. Ensemble d'articulation d'attelage d'un ensemble routier selon l'une quelconque des revendications 8 à 13 **caractérisé en ce que** le système de compression du dispositif d'amortissement des mouvements de lacet (40) est un système mécanique.

15. Ensemble d'articulation d'attelage d'un ensemble routier selon la revendication précédente **caractérisé en ce que** le système de compression mécanique du dispositif d'amortissement des mouvements de lacet (40) comprend au moins un ressort (52).

16. Ensemble d'articulation d'attelage d'un ensemble routier selon la revendication 14 ou 15 **caractérisé en ce qu'**il comprend un dispositif de désactivation de l'amortissement qui réduit ou interrompt l'amortissement en dessous d'une certaine vitesse de roulage.

17. Ensemble d'articulation d'attelage d'un ensemble routier selon la revendication précédente **caractérisé en ce qu'**il comprend un dispositif de désactivation de l'amortissement qui exerce aux moments appropriés une force axiale de sens opposé à la force de compression exercée par le système mécanique de compression du dispositif d'amortissement des mouvements de lacet (40) et qui libère ainsi les surfaces de friction.

18. Ensemble d'articulation d'attelage d'un ensemble routier selon l'une quelconque des revendications 8 à 13 **caractérisé en ce que** le système de compression du dispositif d'amortissement des mouvements de lacet (40) est un système pneumatique, hydraulique ou électrique susceptible d'exercer un effort axial de compression.

19. Ensemble d'articulation d'attelage d'un ensemble routier selon la revendication précédente **caractérisé en ce qu'**il comporte en outre un circuit d'asservissement permettant de régler l'effort de compression appliqué par le système de compression hydraulique, pneumatique ou électrique.

20. Ensemble d'articulation d'attelage d'un ensemble routier selon les revendications 10 et 13 **caractérisé en ce que** sa paroi extérieure (8) présente une ouverture traversante taraudée (57), située en regard d'un alésage (44) du moyeu (42) permettant de mesurer l'usure des disques de friction (41) ou d'insérer un axe fileté permettant d'exercer une pression ascendante sur la coupelle (54) et de libérer les disques de friction (41).

## Claims

1. An articulating coupling (4) for a vehicle assembly formed of a motor vehicle (1) and a trailer (2), the articulating coupling (4) having a first pivot articulation (12) allowing yaw movements comprising friction surfaces for damping yaw movement, and a second articulation (21) allowing rolling and pitching movement,
the first pivot articulation (12) allowing only yaw movements and no rolling and pitching movement and having a pivoting yaw damping device (40) with friction surfaces ;
the second articulation (21) allowing only rolling and pitching movements and no yaw movements and transmitting entirely the yaw movement to the first articulation, so as to disconnect completely the yaw movement from the rolling and pitching movements,
**characterized in that** the articulating coupling (4) comprises a wall assembly (6,8,10,12) which defines an interior space (7) completely closed and protected from incoming pollution and in which the friction surfaces of the pivoting yaw dumping device (40) are lodged.

2. The articulating coupling for a vehicle assembly according to the preceding claim **characterized in that** the pivot articulation allowing yaw movement comprises a bearing rim (12).

3. The articulating coupling for a vehicle assembly according to any of the preceding claims **characterized in that** articulating coupling comprises an articulation for rolling and pitching movement (21) without any possibility of play for yaw movement.

4. The articulating coupling for a vehicle assembly according to the preceding claim, **characterized in that** the absence of play during yaw movement is ensured by a planar bearing of opposing plane surfaces (37,38).

5. The articulating coupling for a vehicle assembly according to any of the preceding claims **characterized in that** the articulation for rolling and pitching movement is a spherically shaped bearing articulation (21).

6. The articulating coupling for a vehicle assembly according to the preceding claim, **characterized in that** the articulation for the rolling and pitching movement (21) has a transverse axle (23) with bears two rings (29,30) threaded on it, that have complementary spherical bearings.

7. The articulating coupling for a vehicle assembly according to the preceding claim, **characterized in that** the two rings (29,30) are secured without any possibility of lateral play which may be compared to yaw movement.

8. The articulating coupling for a vehicle assembly according to any of the preceding claim, **characterized in that** the device for damping yaw movement (40) comprises at least one disc (41) acting in cooperation with at least one opposing surface applied against the disc by a compression system exerting an axial compression force on the at least one disc, the one at least said opposing surface being a friction surface.

9. The articulating coupling for a vehicle assembly according to the preceding claim **characterized in that** the device for damping yaw movement (40) comprises a stack of friction discs (41) alternately secured to the motor vehicle (1) or to the trailer (2), pivoting in relation to one another under the influence of yaw movement.

10. The articulating coupling for a vehicle assembly according to the preceding claim **characterized in that** the stack of friction discs (41) contains at least one fixed disc (48) secured to a central hub (42) that is fixed in relation to the motor vehicle (1) and at least one mobile disc (49) secured to a peripheral drum (43) that is mobile in relation to the vehicle.

11. The articulating coupling for a vehicle assembly according to the preceding claim **characterized in that** the exterior wall (46) of the hub (42) has notches and that at least one of the fixed discs also has complementary notches on an interior periphery around a cutout (50) so that the fixed disc remains steady as it pivots around the central hub (42).

12. The articulating coupling for a vehicle assembly according to claim 10 or 11, **characterized in that** an interior wall (47) of the peripheral drum (43) has notches and **in that** at least one of the mobile discs (49) also has complementary notches on its exterior periphery so that it is driven to pivot by the peripheral drum (43).

13. The articulating coupling for a vehicle assembly according to any of preceding claims 9 to 12, **characterized in that** the compression system comprises a cupel (54) that rests on the stack of discs (41), assuring a perfect contact with the friction surfaces.

14. The articulating coupling for a vehicle assembly according to any of preceding claims 8 to 13, **characterized in that** the compression system for the yaw damping device (40) is a mechanical system.

15. The articulating coupling for a vehicle assembly according the preceding claim, **characterized in that** the mechanical compression system for the yaw damping device (40) comprises at least one spring (52).

16. The articulating coupling for a vehicle assembly according to claim 14 or 15, **characterized in that** it comprises a damping deactivation device capable of either reducing or interrupting damping below a certain travel speed.

17. The articulating coupling for a vehicle assembly according to the preceding claim, **characterized in that** it comprises a damping deactivation device which exerts at appropriate time an axial force in the opposite direction to the compression force exerted by the mechanical compression system of the yaw damping device (40), thereby freeing the friction surfaces.

18. The articulating coupling for a vehicle assembly according to any of the preceding claims 8 to 13, **characterized in that**, the compression system for the yaw damping device (40) is a pneumatic, hydraulic, or electric system capable of exerting axial compression force.

19. The articulating coupling for a vehicle assembly according to the preceding claim, **characterized in that**, it further comprises a control circuit for adjusting the compression force applied by the hydraulic, pneumatic, or electric compression system.

20. The articulating coupling for a vehicle assembly according to the preceding claims 10 and 13, **characterized in that**, its exterior wall (8) has a threaded traversing opening (57) located opposite a bore (44) in the hub (42) for measurement of wear on the friction discs (41) or for insertion of a threaded axle to exert an upward pressure on the cupel (54) and to free the friction discs (41).

## Patentansprüche

1. Kupplungsanlenkungs-Einheit (4) eines Lastzugs bestehend aus einem Kraftfahrzeug (1) und einem Anhänger (2), die ein erstes Drehgelenk (12) für die Schlingerbewegungen umfasst, die Reibungsoberflächen umfasst, um die Schlingerbewegungen zu dämpfen, und ein zweites Gelenk (21) für die Stampf-und Rollbewegungen,
wobei das erste Drehgelenk (12) nur die Schlingerbewegungen und nicht die Stampf- und Rollbewegungen zulässt, und eine Schwenkvorrichtung zur Dämpfung der Schlingerbewegungen (40) mit Reibungsflächen umfasst ;
wobei das zweite Gelenk (21) nur die Stampf-und Rollbewegungen und nicht die Schlingerbewegungen zulässt und die Schlingerbewegungen vollständig an das erste Gelenk überträgt, um die Schlingerbewegungen völlig unabhängig von den Stampf- und Rollbewegungen zu machen;
**gekennzeichnet dadurch, dass** die Kupplungsanlenkungs-Einheit (4) Wände umfasst (6, 8, 10, 12), die einen Innenraum (7) abgrenzen, der vollständig verschlossen und abgedichtet gegen das Eindringen von Schadstoffen ist und in dem die Reibungsflächen der Schwenkvorrichtung zur Dämpfung der Schlingerbewegungen (40) vollständig untergebracht sind.

2. Kupplungsanlenkungs-Einheit eines Lastzugs nach dem vorherigen Anspruch, **gekennzeichnet dadurch, dass** das Drehgelenk, das die Schlingerbewegungen zulässt, einen Rollkranz (12) umfasst.

3. Kupplungsanlenkungs-Einheit eines Lastzugs nach einem beliebigen der vorherigen Ansprüche, **gekennzeichnet dadurch, dass** sie ein Gelenk für die Stampf- und Rollbewegungen (21) umfasst, auf dessen Höhe kein Spiel fur Schlingern möglich ist.

4. Kupplungsanlenkungs-Einheit eines Lastzugs nach dem vorherigen Anspruch, **gekennzeichnet dadurch, dass** das Nicht-Schlingern durch einen ebenen Auflagekontakt von einander gegenüberliegenden ebenen Oberflächen (37, 38) garantiert ist.

5. Kupplungsanlenkungs-Einheit eines Lastzugs nach einem beliebigen der vorherigen Ansprüche **gekennzeichnet dadurch, dass** das Gelenk für die Stampf- und Rollbewegungen ein Gelenk mit sphärischer Lagerfläche (21) ist.

6. Kupplungsanlenkungs-Einheit eines Lastzugs nach dem vorherigen Anspruch, **gekennzeichnet dadurch, dass** das Gelenk für die Stampf- und Rollbewegungen (21) eine Querachse (23) umfasst, auf die zwei Ringe (29, 30) mit komplementärer sphärischer Lagerfläche gesteckt sind.

7. Kupplungsanlenkungs-Einheit eines Lastzugs nach dem vorherigen Anspruch, **gekennzeichnet dadurch, dass** die Ringe (29, 30) ohne Möglichkeit von Seitenspiel befestigt sind, das einer Schlingerbewegung gleichzustellen wäre.

8. Kupplungsanlenkungs-Einheit eines Lastzugs nach einem beliebigen der vorherigen Ansprüche, **gekennzeichnet dadurch, dass** die Vorrichtung zur Dämpfung der Schlingerbewegungen (40) mindestens eine Scheibe (41) umfasst, die mit mindestens einer gegenüberliegenden Oberfläche zusammenwirkt, die auf der Scheibe durch ein Kompressionssystem aufgebracht ist, das auf diese ein Kompressionsaxialkraft ausübt, wobei mindestens eine der einander gegenüberliegenden Oberflächen eine Reibungsfläche ist.

9. Anhängerkupplungsanordnung eines Lastzugs nach dem vorherigen Anspruch, **gekennzeichnet dadurch, dass** die Vorrichtung zur Dämpfung der Schlingerbewegungen (40) einen Stapel von Reibungsscheiben (41) umfasst, die alternativ einstückig mit dem Kraftfahrzeug (1) oder mit dem Anhänger (2) sind und unter der Wirkung der Schlingerbewegungen zueinander rotieren.

10. Anhängerkupplungsanordnung eines Lastzugs nach dem vorherigen Anspruch, **gekennzeichnet dadurch, dass** der Stapel von Reibungsscheiben (41) mindestens eine feststehende Platte (48) enthält, die einstückig mit einer zentralen Nabe (42) ist, die fest im Verhältnis zu dem Kraftfahrzeug (1) ist, und mindestens eine bewegliche Scheibe (49), die einstückig mit einer peripheren Trommel (43) ist, die im Verhältnis zu dem Fahrzeug beweglich ist.

11. Anhängerkupplungsanordnung eines Lastzugs nach dem vorherigen Anspruch, **gekennzeichnet dadurch, dass** die Außenwand (46) der Nabe (42) gerastert ist, und **dadurch**, dass mindestens eine der festen Scheiben (48) ebenfalls komplementär gerastert ist, an ihrem Innenrand um einen Ausschnitt (50) herum, um fest rotierend im Verhältnis zu der zentralen Nabe (42) zu werden.

12. Anhängerkupplungsanordnung eines Lastzugs nach Anspruch 10 oder 11, **gekennzeichnet dadurch, dass** die Innenwand (47) der peripheren Trommel (43) gerastert ist, und **dadurch**, dass mindestens eine der beweglichen Scheiben (49) ebenfalls, komplementär an ihrem äußeren Rand, gerastert ist, um durch die periphere Trommel (43) schwenkend antreibbar zu sein.

13. Anhängerkupplungsanordnung eines Lastzugs nach einem beliebigen der Patentansprüche 9 bis 12, **gekennzeichnet dadurch, dass** das Kompressionssystem einen Teller (54) umfasst, der auf den Scheibenstapel (41) drückt und so einen perfekten Kontakt der Reibungsflächen sichert.

14. Anhängerkupplungsanordnung eines Lastzugs nach einem beliebigen der Patentansprüche 8 bis 13, **gekennzeichnet dadurch, dass** das Kompressionssystem der Vorrichtung zur Dämpfung der Schlingerbewegungen (40) ein mechanisches System ist.

15. Anhängerkupplungsanordnung eines Lastzugs nach dem vorherigen Anspruch, **gekennzeichnet dadurch, dass** das mechanische Kompressionssystem der Vorrichtung zur Dämpfung der Schlingerbewegungen (40) mindestens eine Feder (52) umfasst.

16. Anhängerkupplungsanordnung eines Lastzugs nach Anspruch 14 oder 15, **gekennzeichnet dadurch, dass** sie eine Vorrichtung zur Stilllegung der Dämpfung umfasst, die die Dämpfung unterhalb einer bestimmten Transportgeschwindigkeit verringert oder unterbricht.

17. Anhängerkupplungsanordnung eines Lastzugs nach dem vorherigen Anspruch, **gekennzeichnet dadurch, dass** sie eine Vorrichtung zur Stilllegung der Dämpfung umfasst, die im geeigneten Moment eine Axialkraft in entgegengesetzter Richtung zu der Kompressionskraft ausübt, die von dem mechanischen Kompressionssystem der Vorrichtung zur Dämpfung der Schlingerbewegungen (40) ausgeübt wird, und die so die Reibungsflächen befreit.

18. Anhängerkupplungsanordnung eines Lastzugs nach einem beliebigen der Patentansprüche 8 bis 13, **gekennzeichnet dadurch, dass** das Kompressionssystem der Vorrichtung zur Dämpfung der Schlingerbewegungen (40) ein pneumatische, hydraulische oder elektrische Anlage ist, die geeignet ist, eine axiale Kompressionskraft auszuüben.

19. Anhängerkupplungsanordnung eines Lastzugs nach dem vorherigen Anspruch, **gekennzeichnet dadurch, dass** sie außerdem einen Regelkreis umfasst, wodurch es möglich wird, die Kompressionskraft des hydraulischen, pneumatischen oder elektrischen Kompressionssystems zu regeln.

20. Anhängerkupplungsanordnung eines Lastzugs nach den Ansprüchen 10 und 13, **gekennzeichnet dadurch, dass** ihre Außenwand (8) eine gewindegebohrte Durchgangsöffnung (57) aufweist, die gegenüber einer Ausbohrung (44) der Nabe (42) liegt, wodurch es möglich wird, den Verschleiß der Reibungsscheiben (41) zu messen oder eine Gewindeachse einzusetzen, wodurch es möglich wird, einen aufwärts gerichteten Druck auf den Teller (54) und die Reibungsscheiben (41) auszuüben.
